# EUROPEAN PATENT APPLICATION

(11) **EP 3 823 103 A1**
(43) Date of publication of application: **19.05.2021**
(21) Application number: 19306474.8
(22) Date of filing: 15.11.2019
(51) Int. Cl.: H01R 13/56, H01R 13/58, H01R 43/02, H02G 3/06, H02G 15/04, B23K 20/12, H01R 13/504

(54) **MODULAR BACKSHELL HOUSING AND ASSEMBLY METHOD THEREOF**

(71) Applicant: Connecteurs Electriques Deutsch, 27000 Evreux (FR); Tyco Electronics UK Ltd, Wiltshire SN3 5HH (GB)
(72) Inventor: MOREAU, Jean-Luc, 28200 Châteaudun (FR); PAUL, Martin, High Littleton, BS39 6JJ (GB); STYLES, Ralf, Corsham, SN13 9PX (GB)
(74) Representative: Grünecker Patent- und Rechtsanwälte PartG mbB

(57) **Abstract**

The invention relates to a backshell housing (1) for receiving a cable (2) and adapted to be attached to a connector (4) comprising at least two housing parts (6), wherein the at least two housing parts (6) are friction welded to one another. Each housing part (6) of the at least two housing parts comprises a cable passage (8), the cable passage (8) of a first housing part (10) of the at least two housing parts being continuous with the cable passage (8) of a second housing part (12) of the at least two housing parts. Furthermore, the invention relates to a set and a method for assembling such a backshell housing (1).

## Description

The invention relates to a backshell housing for receiving a cable and adapted to be attached to a connector. The invention further relates to a set and a method for assembling such a backshell housing.

A backshell housing may be mounted on the rear end of a connector providing a cable passage for inserting a cable into the connector. The backshell housing may be designed to help protect connections from mechanical wear, environmental conditions and electromagnetic interference (EMI). Therefore, backshell housings are a valuable asset in electronic systems. However, depending on the application, the customers may have specific requirements for the size and shape of the backshell housing. When the backshell housing is constructed from a composite material, a different die or mold for every variation of the backshell housing is necessary, which increases production costs.

Therefore, it is an object of the invention to reduce the manufacturing costs of the backshell housing.

The invention solves the above-mentioned problem by providing a backshell housing for receiving a cable and being adapted to be attached to a connector, the backshell housing comprising at least two housing parts, wherein the at least two housing parts are friction welded to one another. Each housing part of the at least two housing parts has a cable passage, wherein the cable passage of the second housing part of the at least two housing parts is continuous with the cable passage of the first housing part of the at least two housing parts.

Furthermore, a method provided for assembling the above-mentioned backshell housing, the method comprising the step of friction welding the at least two housing parts to one another.

The invention is further solved by a set for assembling a backshell housing, the set comprising at least two housing parts, each of the at least two housing parts having a cable passage adapted to be continuous with the cable passage of the other housing part when the at least two housing parts are joined to one another.

According to the inventive solution, at least two housing parts are joined together by friction welding allowing for a rigid and stable connection without having to introduce a further component such as an adhesive, which would dissolve during a plating process. The orientation, particularly the rotational orientation, of the housing parts relative to one another may be determined individually for each housing part during the welding process. Consequently, it is possible to manufacture different variations of the backshell housing without having to provide a costly die for each variation.

The invention can be further improved by the following features, which are independent from one another with respect to their respective technical effects and which can be combined arbitrarily.

For example, the first housing part of the at least two housing parts may be a connector end part which is adapted to be attached to the connector. The second housing part of the at least two housing parts may be a cable end part having a cable inlet opening for inserting the cable into the cable passage of the second housing part. The cable inlet opening may be adapted to the diameter of the cable, so that the cable end part may be at least partially sleeved around the cable providing a strain relief.

The connector may be an electric connector. However, it may also be possible that the connector may be a fiber-optic connector or a hybrid connector, which offers both an electric connection and a fiber-optic connection.

Preferably, the backshell housing may be directly attached to a connector interface for mounting the backshell housing to a further connector, such as a plug connector. The connector interface may for example be a coupling nut, which can receive the backshell housing on one end and be rigidly mounted to the plug connector, particularly a housing of the plug connector, e.g. by a threaded connection.

At least one intermediate housing part may be provided, the at least one intermediate housing part being arranged between at least two housing parts. The at least one intermediate housing part may increase the distance between the first housing part and the second housing part, e.g. the connector end part may be further distanced from the cable end part via the at least one intermediate housing part. The at least one intermediate housing part may be arranged directly between two further intermediate housing parts, the cable end part and the connector end part, the cable end part and a further intermediate part and/or the connector end part and a further intermediate part.

The at least one intermediate housing part may comprise an essentially cylindrical shape and may extend along a longitudinal axis. Therefore, it is possible to increase the length of the backshell housing may be extended along the longitudinal axis by the at least one intermediate housing part. The at least one intermediate housing part may for example be about 5 mm or about 10 mm long. The length of the backshell housing may be further increased by providing multiple intermediate housing parts. Preferably, the multiple intermediate housing parts may be structurally identical, so that it is not necessary to produce different housing parts.

In many applications however, it is necessary to provide an angled backshell housing. Thus, it is advantageous if at least one housing part forms an elbow. Preferably, the at least one intermediate housing part may form an elbow, so that a front opening and a back opening of the cable passage are arranged in planes, which are inclined to one another.

The part forming the elbow may preferably be bent around an integer of about 180°, such as about 30° or about 45°. Multiple elbows may be provided to form a composite elbow of the backshell housing. For example, in order to form a backshell housing having a 90° elbow, two 45° or three 30° elbow parts may be joined to one another. The manufacturing of smaller angled elbows, such as about 30° and about 45° elbows, is easier than manufacturing a single 90° elbow.

A backshell housing may comprise two elbows and at least one straight intermediate housing part arranged between the elbows allowing to form a composite elbow without risking a bending strain on the cable due to a rather abrupt change of direction.

Consequently, the amount of differently configured backshell housings that can be formed using a set of housing parts can be immensely increased.

At least one housing part of the at least two housing parts may comprise at least one orientation feature formed on an outer surface of the at least one of the at least two housing parts. The at least one orientation feature may be formed as a depression on the outer surface of the at least one housing part, which may further act as an interface for attachment of the tooling equipment during the friction welding process. The orientation feature may help in determining the desired relative rotational position of the respective housing part relative to the other housing parts. Every rotational formation in the 360° is possible and can be determined during the friction welding process. Therefore, the number of possible backshell housing configurations can be increased even more.

Prior to joining, at least one of the at least two housing parts may comprise at least one welding protrusion adapted to be received in at least one welding notch formed on the other of the at least two housing parts. The connector end part may preferably comprise a hollow cylindrical shape adapted to be mounted in a housing of the connector, particularly a rear opening of the housing. The connector end part may preferably be adapted to be attached to a connector interface, such as a coupling nut. The coupling nut may comprise a cavity at a rear end for at least partially receiving the connector end part. The connector end part may comprise the at least one welding notch formed on an end face of the connector end part framing the cable passage. The cable end part may comprise a flange having an end face with at least one protruding welding protrusion, which may be received in the at least one welding notch. Due to the friction generated by the friction welding process, the welding protrusion melts in the welding notch at which point the relative rotational position between the components can be adjusted to its final position and be held still to cool down the molten phase. Consequently, a rigid joint between the housing parts may be formed having a continuous cable passage.

The at least one intermediate housing part may, prior to joining, comprise at least one welding notch formed on one end face adapted to receive a welding protrusion of another housing part and at least one welding protrusion formed on the other end face. Therefore, multiple structurally-identical intermediate housing parts may be stringed together without having to adjust the blank for manufacturing said intermediate housing parts.

According to another aspect of the invention, prior to joining, the at least one welding protrusion may comprise a length, particularly in the axial direction at which it protrudes from the end face of the housing part, which is longer than the depth of the welding notch, particularly in the axial direction in which it extends from the end face. Therefore, prior to joining, the end faces of the respective housing parts may be distanced from one another, preventing the end faces from melting. Furthermore, it is possible to clearly define the moment at which the at least one welding protrusion melts in the at least one welding notch. When the at least one welding protrusion melts, it is possible to insert the excessive length of the welding protrusion into the notch so that the opposing end faces abut one another sealing the cable passage at the joint. The molten part may be pushed into narrow gaps between the remaining welding protrusion and the notch increasing the welding quality and the welding strength at the joint.

The at least one welding joint and/or the at least one welding protrusion may, prior to joining, be arranged coaxially with the cable passage, particularly coaxially with the cable passage at the respective end face.

A plurality of separate notches may be provided on an end face arranged in an annular formation and a plurality of separate protruding flaps may be provided on the other end face, each flap being adapted to be received in a respective notch. The friction may be generated by an oscillating movement or the like. Therefore, the relative rotational position of the housing parts may be pre oriented prior to welding.

However, in order to receive a uniform weld joint, the welding notch and the welding protrusion may preferably comprise a continuous annular shape. Consequently, the housing parts may be welded together having a continuous joint section. This may further increase the reliability of the joint, specifically, in terms of a maximum bending moment it may endure before breakage.

An exceptionally uniform and strong joint between the at least two housing parts may be achieved by spin welding. One housing part may be kept stationary, while the other housing part is rotated and simultaneously pressed against the housing part. The heat generated via the internal friction caused by the relative rotation of the two housing parts to one another causes the material to melt and a bond to be created that continuously runs around the circumference of the interacting welding features. In particular, in a high production environment, spin welding may be advantageous due to its high process speed and repeatability.

Each housing part of the at least two housing parts may be formed as a monolithic unit, for example as an injection molded component. This allows for fast and cost efficient production of each housing part in a mass scale. The number of different dies can be reduced to a minimum since different configurations of the backshell housing may be achieved by combining modules of the housing parts.

According to another aspect of the invention, the housing part may be formed as a multi component molded piece, wherein the welding protrusion may be optimized for bonding with the material at the welding notch during the friction welding process. A different material, being optimized for screening, sealing and chemical resistance, may form the remainder of the housing part.

Preferably, the joint between the housing parts may comprise a continuous section of material, meaning that no or only little gaps, e.g. air gaps, are formed in the welded joint, further increasing the strength and reliability of the joint.

The at least two housing parts may be formed by a thermoplastic material, particularly a polyimide, such as polyetherimide. To further reinforce the strength and/or stiffness of the material, the material may be further reinforced by glass fibers.

In the following, the invention is explained in greater detail with reference to the accompanying drawings, in which exemplary embodiments are shown.

In the figures, the same reference numerals are used for elements, which correspond to one another in terms of their function and/or structure.

According to the description of the various aspects and embodiments, elements shown in the drawings can be omitted if the technical effects of those elements are not needed for a particular application, and *vice versa*: i.e. elements that are not shown or described with reference to the figures but are described above can be added if the technical effect of those particular elements is advantageous in a specific application.

In the figures:
- Fig. 1: shows a schematic side view of a first embodiment of a backshell housing according to the invention;
- Fig. 2: shows a schematic side view of a second embodiment of the backshell housing according to the invention;
- Fig. 3: shows a schematic side view of a first housing part of the inventive backshell housing;
- Fig. 4: shows a schematic side view of a second housing part of the inventive backshell housing;
- Fig. 5: shows a schematic side view of a straight intermediate housing part of the inventive backshell housing;
- Fig. 6: shows a schematic side view of an elbow intermediate housing part of the inventive backshell housing;
- Fig. 7: shows a schematic side view of a third embodiment of the inventive backshell housing; and
- Fig. 8: shows a schematic side view of a fourth embodiment of the inventive backshell housing.

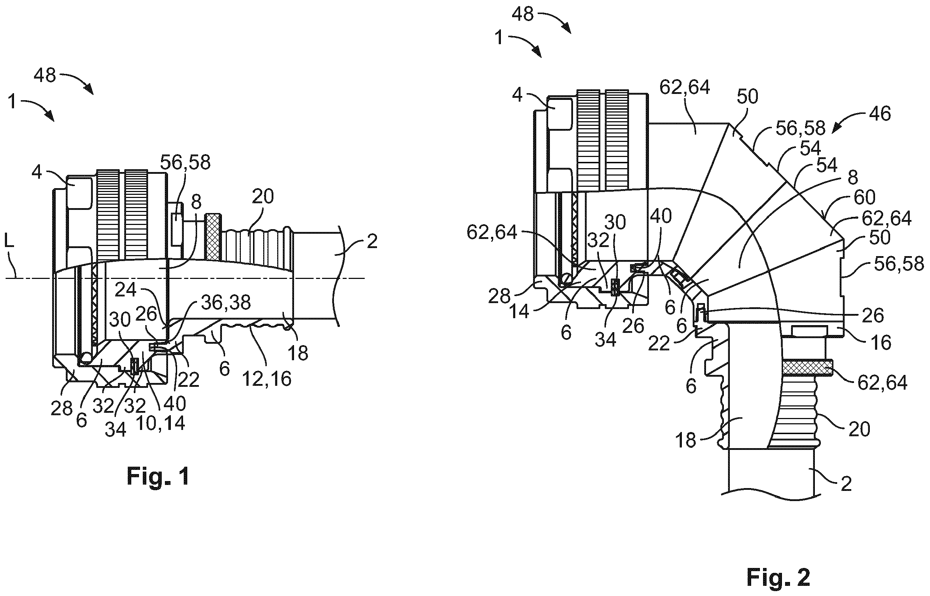

A first embodiment of an inventive backshell housing 1 is elucidated with reference to Fig. 1.

The backshell housing 1 for receiving a cable 2 and adapted to be attached to a connector 4, such as an electric connector and/or a fiber-optic connector, comprises at least two housing parts 6, wherein the at least two housing parts 6 are friction welded to one another. Each housing part 6 of the at least two housing parts comprises a cable passage 8, the cable passage 8 of a first housing part 10 of the at least two housing parts 6 being continuous with the cable passage 8 of a second housing part 12 of the at least two housing parts 6.

According to the inventive solution, at least two housing parts 6 are joined together by friction welding allowing for a rigid and stable connection without having to introduce a further component such as an adhesive, which would dissolve during a plating process. The orientation of the housing parts 6 relative to one another, particularly the rotational orientation, may be determined individually for each backshell housing 1 during the welding process. Consequently, it is possible to manufacture different variations of the backshell housing 1 without having to provide a costly die for each variation.

In the figures, a cut section is shown to demonstrate the interaction between the at least two housing parts 6. However, it is acknowledged that the welding features 14 shown in the figures may actually only be visible before the welding process and are just shown for demonstrative purposes. After welding, a continuous section of material may be formed at a joint between the at least two housing parts 6.

Preferably, the at least two housing parts 6 are spin welded to one another. During spin welding, one housing part of the at least two housing parts 6 is held stationary while the other housing part is rotated and pressed against the stationary housing part 6. Due to the friction generated between the housing parts 6, the material of the at least two housing parts, at least at the interface between the at least two housing parts 6, melts. During the cooling period after the material has melted, the two housing parts 6 are pressed together in a predetermined relative rotational position to one another, rigidly connecting the at least two housing parts 6 in that predetermined position. Furthermore, during spin welding, the heat is evenly generated circumferentially at the interface between the housing parts 6 forming a strong weld having essentially the same resistance to fracture in each radial direction, e.g. due to a high bending moment.

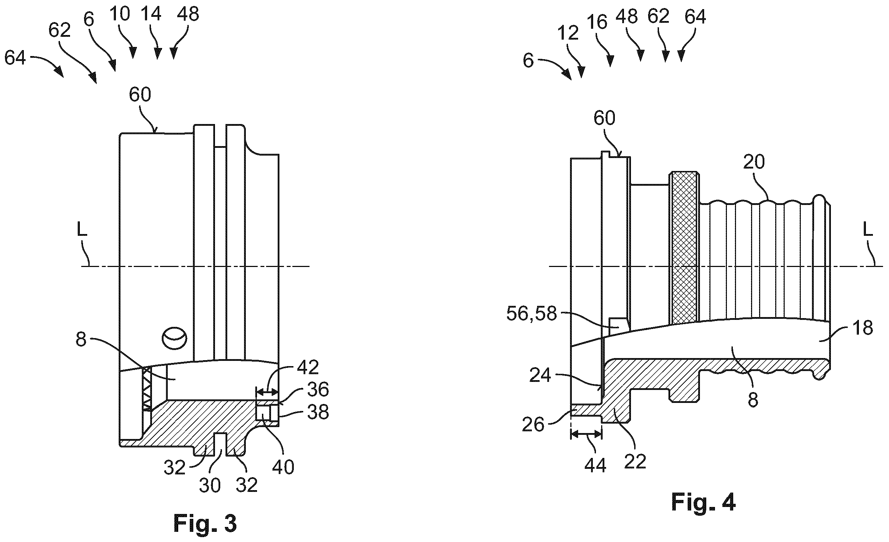

Fig. 1 shows a simple embodiment of the backshell housing 1, wherein the backshell housing 1 is adapted to extend along a longitudinal axis L from a rear end of the connector 4. The backshell housing 1 comprises two housing parts 6, wherein the first housing part 10 is a connector end part 14 adapted to be attached to the connector 4 and the second housing part 12 is a cable end part 16 having a cable inlet opening 18 for receiving the cable 2. Preferably, the connector 4 may be a connector interface 28 adapted to mount the backshell housing 1 to a further connector (not shown), e.g. a plug connector. The connector end part 14 is shown in Fig. 3 and the cable end part 16 is shown in Fig. 4.

The cable inlet opening 18 may be adapted to the diameter of the cable 2, so that the cable end part 16 may at least partially be sleeved around the cable 2 providing an additional strain relief.

The cable end part 16 may comprise an essentially cylindrical shape having a neck 20 at a free end forming the cable inlet opening 18. Opposite the free end, the cable end part 16 may comprise a flange 22 protruding radially from the neck 20.

The flange 22 may comprise a front face 24 having an annular welding protrusion 26 arranged coaxially with the cable passage 8 of the cable end part 16 and protruding axially from the front face 24.

The connector end part 14 may be adapted to be attached to the connector interface 28. In the shown exemplary embodiments, the connector end part 14 is adapted to be received in a rear end of the connector interface 28. Preferably, the connector end part 14 comprises an essentially cylindrical shape having an annular slot 30 formed along the outer circumference of the connector end part's 14 body being arranged between two radially protruding collars 32. A latch 34 of the housing may be received in the annular slot 30 in order to secure the connector end part 14 in the connector interface 28 by means of a positive fit preventing a relative movement of the connector end part 14 and the connector interface 28 essentially parallel to the longitudinal axis L. The latch 34 may preferably be a retention ring, i.e. a circlip, fastening the connector end part 14 to the connector interface 28.

The cable passage 8 at the connector end part 14 may comprise a larger diameter than the cable passage 8 of the cable end part 16 at least at the neck 20 allowing the cable to radially move within the cable passage 8.

A front face 36 facing away from the connector 4 comprises a circumferential frame 38 framing an opening of the cable passage 8. The frame 38 may further comprise a welding notch 40 extending from the front face 36 into the frame 38 essentially parallel to the center axis of the cable passage 8. The welding notch 40 may preferably be annular and may be arranged coaxially with the cable passage 8 and be adapted to receive the welding protrusion 26 formed on the cable end part 16.

The welding notch 40 may comprise a depth 42 in the axial direction smaller than a length 44 in the axial direction of the welding protrusion 26. Therefore, prior to welding, the front faces 24, 36 of the respective housing parts 14, 16 may be distanced from one another so that only the welding protrusion 26 and the welding notch 40 may be melted due to the heat generated by the friction between the two parts. Once the welding protrusion 26 starts melting, the housing parts 14, 16 may be pushed together and held at a predetermined relative rotational position to one another. The excessive material of the welding protrusion 26 may further ensure that the welding notch 40 is completely filled with the material of the welding protrusion 26 for establishing a section of continuous material at the welding joint.

The first embodiment described with reference to Fig. 1 is a simple backshell housing 1 extending along the longitudinal axis L from the rear end of the connector interface 28. However, in many applications it is necessary to provide an angled backshell housing 1 for redirecting the cable 2 via the backshell housing 1 into the connector 4. In Fig. 2, an exemplary embodiment of an angled backshell housing 1 is shown.

The backshell housing 1 may form a 90° elbow 46 such that the cable passage 8 of the connector end part 14 and the cable passage 8 of the cable end part 16 are arranged in planes, which are inclined to one another at about 90°.

The connector end part 14 and the cable end part 16 may be essentially structurally identical to the connector end part 14 and the cable end part 16 discussed with reference to Figs. 1, 3 and 4. Consequently, the housing parts 6 may be standardised and provided in a set 48 for building a composite backshell housing 1. Therefore, less different dies have to be provided in order to form a specific backshell housing 1 reducing the manufacturing and storage costs.

At least one intermediate housing part 50 may be provided, the at least one intermediate housing part 50 being arranged between the first housing part 10, i.e. the connector end part 14, and the second housing part 12, i.e. the cable end part 16.

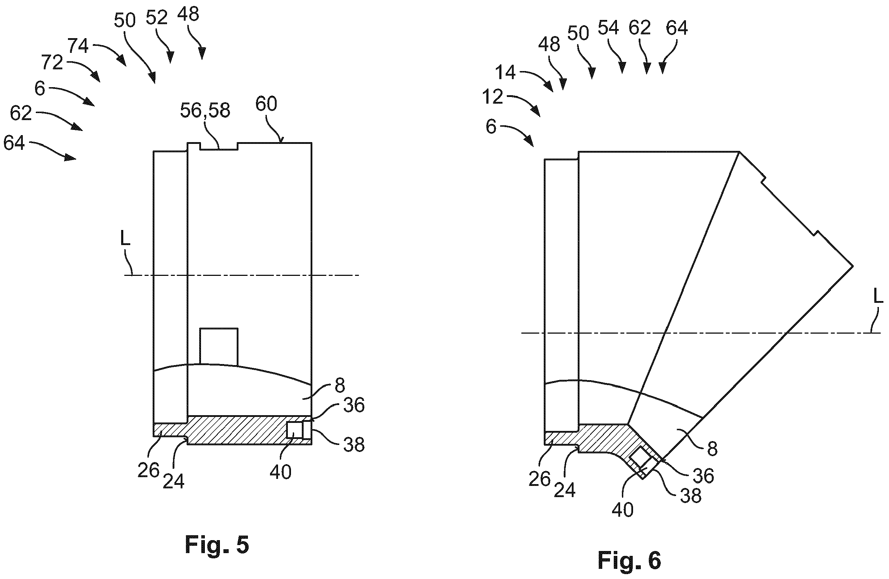

The at least one intermediate housing part 50 may act as a spacer 52 adapted to increase the distance between two further housing parts 6 as shown in Fig. 5 or form an elbow 54 as shown in Fig. 6.

The at least one intermediate housing part 50 may be adapted to be fiction welded to another housing part 6 at either end of the intermediate housing part 50. Therefore, prior to welding, the intermediate housing part 50 may feature the welding protrusion 26 at one end and the welding notch 40 at the other end of the intermediate housing part 50.

Consequently, the intermediate housing part 50 may be fiction welded to a further intermediate housing part 50, the connector end part 14 and/or the cable end part 16.

The intermediate housing part 50 forming the elbow 54 may preferably be bent around an approximate 45° angle, such that the respective front faces of each end are arranged in planes inclined to one another at an approximate 45° angle. Consequently, multiples of the 45° angle elbow may be formed by stringing together multiple structurally-identical intermediate housing parts 50 as shown in Fig. 2. In Fig. 2, two intermediate housing parts 50 forming the elbow 54 are friction welded, particularly spin welded to one another forming the composite elbow 46 of the backshell housing 1. Therefore, different composite elbows 46 may be formed by stringing together standardized intermediate housing parts 50.

It should be noted, that the 45° elbow of the intermediate housing part 50 is just exemplary, and any other angle may be standardized, such as an approximate 30° angle. The elbow of the intermediate housing part 50 may preferably be an integer of 90°, 120° and/or 180°. However, it has been found that the production of a larger angled intermediate housing part 50 is rather difficult. Thus, a smaller angle such as a 45° or 30° angle is preferred as a standardized intermediate housing part 50 forming an elbow 54.

For visually helping in determining the rotational position of the at least two housing parts 6 relative to one another, at least one of the at least two housing parts 6 may comprise at least one orientation feature 56, such as a depression 58 formed on an outer surface 60 of the respective housing part 6.

Each housing part 6 may be formed as a monolithic unit 62, preferably as an injection molded component 64. Injection molding is a cost efficient production method particularly for the production of the component in mass numbers. According to the invention, modular housing parts may be attached to one another by friction welding for forming the composite back shell housing 1. Hence, the housing parts may be standardized and provided in the set 48, so that only a limited number of dies are necessary, greatly reducing the manufacturing costs. With the limited number of housing parts, it is possible to form a great variety of structurally different back shell housings 1.

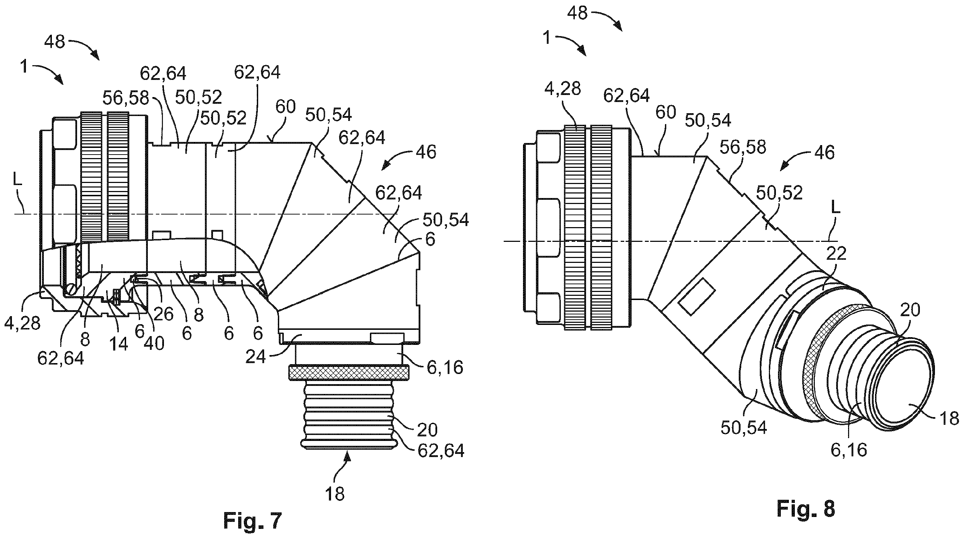

Further embodiments of a back shell housing 1 are depicted in Figs. 7 and 8. The back shell housing 1 of Fig. 7 differs from the back shell housing 1 shown in Fig. 2 in that two intermediate housing parts 50 are arranged as spacers 52 between the connector end part 14 and the composite elbow 46. The spacers 52 may extend axially essentially parallel to the longitudinal axis L and may comprise different lengths in a direction essentially parallel to the longitudinal axis L. One spacer may, for example, have a length of about 10 mm while the other has a length of about 5 mm. Thus, a composite spacer having a length of about 15 mm may be formed. The spacers 52 may be inserted individually or in combination as required at any point between the connector end part 14 and the cable end part 16.

The back shell housing 1 of Fig. 8 comprises a composite elbow 48 formed by two elbow 54 intermediate housing parts, which are arranged in a different rotational position to one another, such that the respective elbows 54 are inclined to one another. In order to reduce the strain to the cable due to the abrupt change of direction of the cable passage, at least one spacer 52 may be provided between the two elbows 54.

### REFERENCE NUMERALS

- 1: backshell housing
- 2: cable
- 4: connector
- 6: housing part
- 8: cable passage
- 10: first housing part
- 12: second housing part
- 14: connector end part
- 16: cable end part
- 18: cable inlet opening
- 20: neck
- 22: flange
- 24: front face
- 26: welding protrusion
- 28: connector interface
- 30: slot
- 32: collar
- 34: latch
- 36: front face
- 38: frame
- 40: welding notch
- 42: depth
- 44: length
- 46: elbow
- 48: set
- 50: intermediate housing part
- 52: spacer
- 54: elbow
- 56: orientation feature
- 58: depression
- 60: outer surface
- 62: monolithic unit
- 64: injection molded component

- L: longitudinal axis

## Claims

1. Backshell housing (1) for receiving a cable (2) and adapted to be attached to a connector (4), the backshell housing (1) comprising at least two housing parts (6), wherein the at least two housing parts (6) are friction welded to one another, each housing part (6) of the at least two housing parts (6) comprising a cable passage (8), wherein the cable passage (8) of a first housing part (10) of the at least two housing parts (6) is continuous with the cable passage (8) of a second housing part (12) of the at least two housing parts (6).

2. Backshell housing (1) according to claim 1, wherein at least one intermediate housing part (50) is provided, the at least one intermediate housing part (50) being arranged between at least two housing parts (6).

3. Backshell housing (1) according to claim 1 or 2, wherein at least one housing part (6) forms an elbow (54).

4. Backshell housing (1) according to claim 3, wherein the elbow (54) is bent around about 45°.

5. Backshell housing (1) according to any one of claims 1 to 4, wherein, prior to joining, at least one of the at least two housing parts (6) comprises at least one welding protrusion (26) adapted to be received in at least one welding notch (40) formed on the other of the at least two housing parts (6).

6. Backshell housing (1) according to claim 5, wherein, prior to joining, a length (44) of the at least one welding protrusion (26) is longer than a depth (42) of the at least one welding notch (40).

7. Backshell housing (1) according to any one of claims 2 to 6, wherein, prior to joining, the at least one intermediate housing part (50) comprises at least one welding protrusion (26) and at least one welding notch (40) arranged on opposite ends of the intermediate housing part (50).

8. Backshell housing (1) according to any one of claims 5 to 7, wherein, prior to joining, the at least one welding protrusion (26) and/or the at least one welding notch (40) comprises an essentially annular shape.

9. Backshell housing (1) according to any one of claims 5 to 8, wherein, prior to joining, the at least one welding protrusion (26) and/or the at least one welding notch (40) is arranged coaxially with the cable passage (8).

10. Backshell housing (1) according to any one of claims 1 to 9, wherein the at least two housing parts (6) are each formed as an injection molded component (64).

11. Backshell housing (1) according to any one of claims 1 to 10, wherein at the joint between the at least two housing parts (6), a continuous section of material is formed.

12. Set (48) for assembling a backshell housing (1), the set (48) comprising at least two housing parts (6), the at least two housing parts (6) each comprising a cable passage (8) and being adapted to be friction welded to one another, wherein the cable passage (8) of a first housing part (10) of the at least two housing parts (6) is adapted to be continuous with the cable passage (8) of a second housing part (10) of the at least two housing parts (6).

13. Set (48) according to claim 12, wherein the set (48) further comprises at least one intermediate housing part (50) adapted to be friction welded between at least two housing parts (6).

14. Method for assembling a backshell housing (1) for receiving a cable (2) and adapted to be attached to a connector (4), the backshell housing (1) comprising at least two housing parts (6), each housing part (6) of the at least two housing parts (6) comprising a cable passage (8), wherein the method comprises the step of friction welding the at least two housing parts (6) to one another so that the cable passage (8) of a first housing part (10) of the at least two housing parts (6) is continuous with the cable passage (8) of a second housing part (12) of the at least two housing parts (6).

15. Method according to claim 14, wherein the at least two housing parts (6) are welded together by spin welding.
